# EUROPÄISCHE PATENTSCHRIFT

(11) **EP 0 570 765 B1**
(45) Veröffentlichungstag und Bekanntmachung des Hinweises auf die Patenterteilung: **02.01.1997**
(21) Anmeldenummer: 93107274.8
(22) Anmeldetag: 05.05.1993
(51) Int. Cl.: A61C 1/00, H01H 21/26

(54) **Fusssteuervorrichtung für zahnärztliche Zwecke**
Foot-controlled device for dental use
Dispositif de commande par le pied à usage dentaire

(30) Priorität: 18.05.1992 DE 4216371; 18.05.1992 DE 4216370
(43) Veröffentlichungstag der Anmeldung: 24.11.1993
(73) Patentinhaber: SIEMENS AKTIENGESELLSCHAFT, 80333 München (DE)
(72) Erfinder: Hain, Josef, W-6947 Laudenbach (DE); Helfrich, Hans, W-6800 Mannheim 31 (DE); Landgraf, Hermann, W-6143 Lorsch (DE)

(56) Entgegenhaltungen:
- EP-A- 0 455 852
- FR-A- 2 482 446
- US-A- 3 250 874

## Beschreibung

Die Erfindung betrifft eine Fußsteuervorrichtung für zahnärztliche Zwecke, bei der ein im wesentlichen plattenförmiges und waagerecht ausgerichtetes Betätigungsorgan vorhanden ist, auf das der Fuß einer Bedienperson vollflächig aufstellbar ist und das zum Auslösen einer Schalt- oder Steuerfunktion aus einer Neutralstellung in wenigstens zwei einander entgegengesetzt gerichtete Schaltstellungen bringbar ist.

Eine Fußsteuervorrichtung gemäß dem Oberbegriff von Anspruch 1 ist beispielsweise aus der europäischen Patentanmeldung 0 455 852 bekannt. Obgleich diese Art von Fußsteuervorrichtungen gegenüber anderen Fußsteuervorrichtungen, deren Drehpunkt im Bereich der Fußspitze oder auch Ferse liegt, gewisse Vorteile hat, so stellt das Halten des Betätigungsorganes in der neutralen Ruhestellung eine gewisse Problematik dar, weil das Halten des Betätigungsorganes in dieser Neutralstellung nur durch unterstützende Muskelanspannung realisiert werden kann. Der Bedienerfuß muß stets in einer günstigen Position über der Drehachse positioniert werden und auch während der Bedienung in dieser Position gehalten werden, um stets eine einigermaßen entspannte Fußhaltung sicherzustellen. Um auch unterschiedlichen Schuhgrößen Rechnung zu tragen, müßten veränderbare Fersenanschläge vorgesehen werden, die jedoch die Handhabung und den Bedienkomfort verschlechtern würden.

Aus US-PS 2 762 891 ist ein Fußschalter bekannt, der ein als Trittplatte ausgebildetes und in der Ausgangsstellung schräg gestelltes Betätigungsorgan enthält. Die Trittplatte, auf die der Fuß einer Bedienperson flächig aufstellbar ist, enthält im Bereich der Ferse ein Anlageteil, welches dem Fuß einen sicheren Halt vermitteln soll. Die Trittplatte wird mittels einer etwa mittig gelegenen Druckfeder in einer schräg stehenden Ausgangsposition gegen einen Anschlag gedrückt. Die Trittplatte kann so um eine etwa im unteren (der Ferse zugewandten) Drittel der Fußschalterlänge gelegene Horizontalachse entgegen der Kraft der Druckfeder bis zum Erreichen eines weiteren Anschlages gekippt werden. Im oberen Drittel enthält das Betätigungsorgan einen Rollenhebel, der auf einer konzentrisch zum Gehäusemittelpunkt des Fußschalters verlaufenden Kurvenbahn abrollen kann. Der Rollenhebel ist an einem um eine Horizontalachse schwenkbar gelagerten Teil befestigt, der wiederum mit einem Potentiometer zur Veränderung der Drehzahl eines Dentalmotors gekoppelt ist. Mit dem Kippen des Betätigungsorgans wird eine Schwenkbewegung des vorgenannten schwenkbaren Teils eingeleitet und damit eine Verstellung des Potentiometers erzielt.

Die Trittplatte kann bei diesem bekannten Fußschalter nicht aus einer Neutralstellung heraus in zwei einander entgegengesetzte Arbeitsstellungen gebracht werden; sie kann lediglich von einer Endstellung aus in einer Richtung bis Erreichen einer zweiten Endstellung bewegt werden.

Der im Anspruch 1 angegebenen Erfindung liegt die Aufgabe zugrunde, eine Fußsteuervorrichtung der eingangs genannten Gattung anzugeben, mit der die angegebenen Nachteile vermieden werden können.

Dadurch, daß das Betätigungsorgan in zwei beabstandeten Auflagern gelagert ist, kann die Neutral(Ruhe-)stellung unabhängig von der Position und auch unabhängig von der Schuhgröße der Bedienperson in einem weiten Bereich eingehalten werden, ohne daß der Fuß starr in einer ganz bestimmten Position gehalten zu werden braucht. Die Betätigung kann auch unter großer Belastung mit geringem Kraftaufwand und sicher aufliegender Fußhaltung erfolgen. Besondere Vorteile ergeben sich, wenn die Schaltplatte mit Hilfe von Blattfedern kippbar gelagert ist, weil man dann mit Hilfe einfacher preiswerter Bauteile eine leichte Montage und Demontage der Fußsteuervorrichtung bewerkstelligen kann. Ein weiterer Vorteil ist, daß mit solchen Blattfedern ein sehr guter Ausgleich von Toleranzen ermöglicht wird.

Mit der gemäß einer vorteilhaften Ausgestaltung der Erfindung vorgeschlagenen Maßnahme, das Betätigungsorgan mit Hilfe eines Rastgliedes (40, 41) in der Neutralstellung mit definierter Haltekraft zu halten, wobei nach Überwinden eines durch die Haltekraft definierten Druckpunktes das Betätigungsorgan (4) nach einem relativ kurzen Verstellweg durch einen Anschlag (27, 28) begrenzt und ein Steuervorgang ausgelöst wird, läßt sich eine erleichterte Bedienung und eine verbesserte Bediensicherheit in bezug auf das Betätigen der Schalt- und/oder Steuerorgane zum Auslösen eines Steuervorganges erreichen.

Es wird dabei von der Erkenntnis ausgegangen, daß zur Überwindung der mit einer definierten Haltekraft (Druckpunkt) belasteten Neutralstellung eine gewisse Muskelanspannung erforderlich ist. Diese Muskelanspannung führt nach Überwindung der Haltekraft zu einem Überhub, der in Verbindung mit den den Schaltstellungen zugeordneten Anschlägen aufgefangen wird, wodurch die Bedienperson eine deutlich spürbare Rückmeldung dafür erhält, daß die Neutralstellung verlassen wurde und daß ein Schaltvorgang ausgelöst worden ist. Die Rückmeldung über den Schaltzustand ist von der Bedienperson insbesondere deshalb deutlich spürbar, weil die Begrenzung des Überhubes durch die Anschläge nach einem relativ kurzen Verstellweg unmittelbar nach Überwinden des Druckpunktes erfolgt.

Weitere Vorteile ergeben sich aus der Beschreibung eines Ausführungsbeispiels der Erfindung.

Es zeigen:
Figur 1 die erfindungsgemäße Fußsteuervorrichtung in einer schaubildlichen Darstellung,
Figur 2 Einzelteile der Fußsteuervorrichtung nach Figur 1, unterteilt in die Abschnitte 2A und 2B in einer Explosionsdarstellung,
Figur 3 eine Prinzipdarstellung zur Lagerung der Schaltplatte,
Figur 4 einen ersten Ausschnitt aus Figur 2 in der Draufsicht,
Figur 5 einen zweiten Ausschnitt aus Figur 2 im Schnitt.

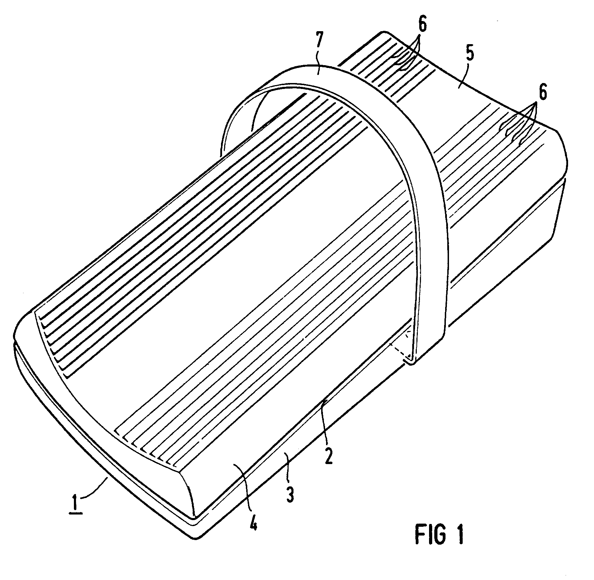

Die Figur 1 zeigt die gesamte Fußsteuervorrichtung in einer schaubildlichen Darstellung. Ein in der Draufsicht im wesentlichten rechteckiges Gehäuse 1 ist durch Längsteilung entlang einer Trennlinie 2 in zwei Gehäusehälften unterteilt, in ein Basisteil 3 und ein darüber angeordnetes Betätigungsorgan 4. Das Betätigungsorgan 4 enthält ein haubenartig ausgebildetes Auflageteil 5, welches eine im Querschnitt leicht konkave Oberfläche aufweist, die, ausgehend von einem neutralen Mittelteil, seitliche Abschnitte aufweist, welche mehrere, längs verlaufende Anlageflächen 6 enthält, die sägezahnartig abgestuft sind. Die so gebildeten, längs verlaufenden Kanten geben dem Bedienerfuß, insbesondere bei seitlichen Auslenkbewegungen, einen guten Halt, wodurch Kipp-und/oder Drehbewegungen exakt ausgeführt werden können. Mit Hilfe eines am Basisteil 3 vorzugsweise lösbar befestigten Bügels 7 kann eine Änderung des Stellplatzes der Fußsteuervorrichtung problemlos durchgeführt werden.

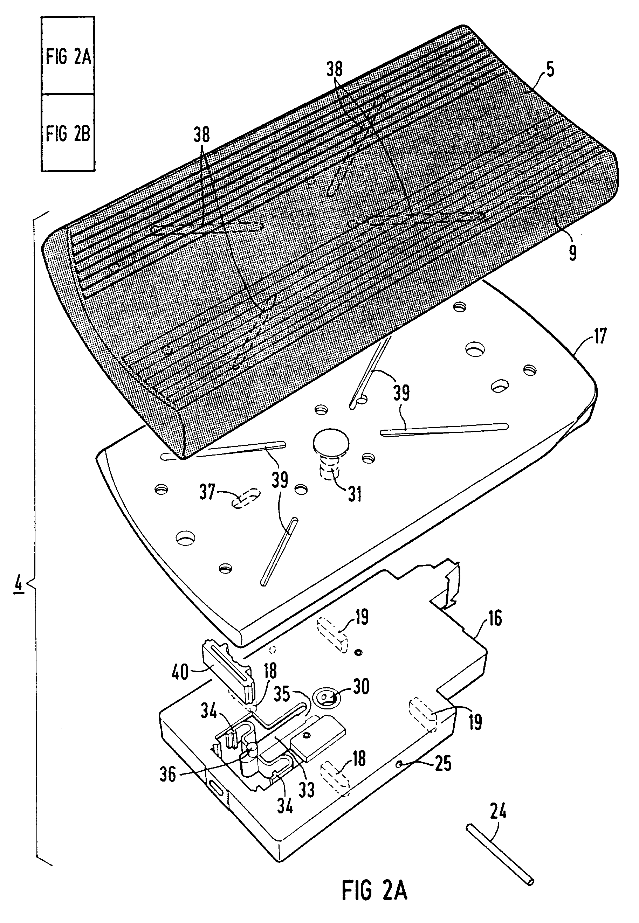

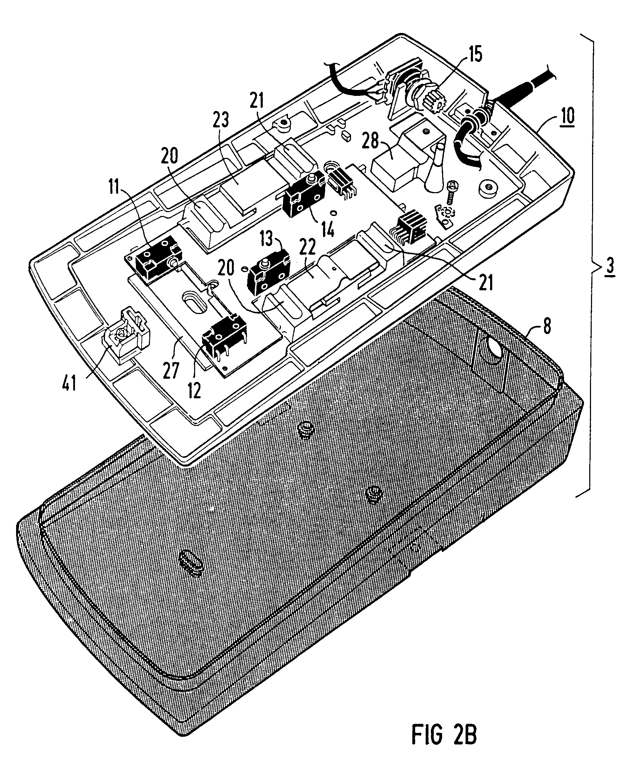

Wie aus der Darstellung nach Figur 2B hervorgeht, ist das Basisteil 3 wannenartig ausgebildet und enthält einen hochgezogenen und leicht nach außen gewölbten Rand 8, der mit einem leicht nach innen gezogenen Rand 9 des haubenartig ausgebildeten Fußauflageteils 5 (Fig. 2A) korrespondiert. Im montierten Zustand wird so eine spritzwassergeschützte Verbindung hergestellt. Sowohl das Basisteil 3 als auch das Fußauflageteil 5 sind aus elastischem Material, vorzugsweise aus Gummi, wodurch, wie aus der nachfolgenden Beschreibung noch näher hervorgeht, ein problemloses Schalten sowohl bei Kippen um eine Querachse als auch bei Drehen um eine Horizontalachse möglich ist.

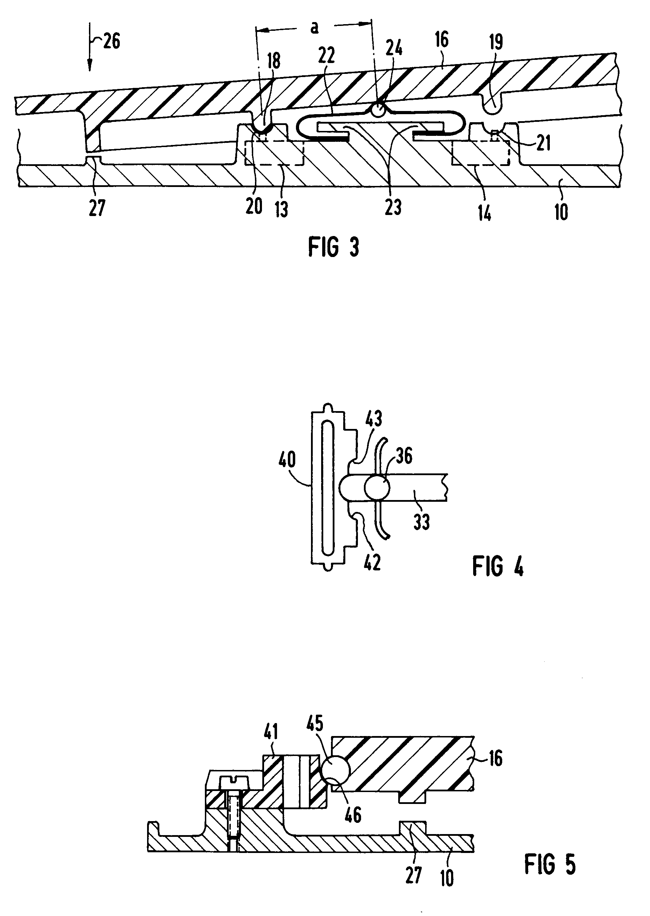

In das wannenartig ausgebildete Basisteil 3 ist eine Grundplatte 10 aus festem Material, vorzugsweise aus Alu, einsetzbar. Die Grundplatte 10 ist Träger mehrerer Steuer- und Schaltelemente 11 bis 15 sowie nicht näher bezeichneter elektrischer Anschlußelemente. Die Schalt- und Steuerelemente 11 bis 15 werden mit einer im montierten Zustand oberhalb der Grundplatte angeordneten Schaltplatte 16 (Fig. 2A) bzw. mit einer darüber angeordneten Trittplatte 17, die wiederum mit dem Fußauflageteil 5 verbunden ist, betätigt. Die Lagerung der Schaltplatte 16 an der Grundplatte 10 wird unter Zuhilfenahme der Prinzipdarstellung nach Figur 3 näher erläutert.

Die Schaltplatte 16 weist an der Unterseite zwei Paar Vorsprünge 18, 19 auf, die mit Halbschalenquerlagern 20, 21 der Grundplatte 10 (Fig. 2B) korrespondieren. In der Neutralstellung (Ruhestellung) werden die vier Vorsprünge 18, 19 mit Hilfe zweier Blattfedern 22 (in Figur 2B ist die eine, linke Blattfeder nicht eingezeichnet) in den Halbschalenquerlagern 20, 21 spielfrei gehalten. In dieser Stellung sind die beiden unterhalb der Vorsprünge angeordneten und in Ebene der Lagerschalen justierten Steuerelemente 13 und 14 geschaltet, d.h. deren Betätigungselemente sind gedrückt.

Die Blattfedern 22 sind spangenartig ausgebildet und umgreifen einerseits Vorsprünge 23 der Grundplatte 10 und andererseits beidseitig angeordnete Steckachsen 24, die in entsprechenden Bohrungen 25 der Schaltplatte 16 geführt sind. Die so gebildeten Lager 18, 20 und 19, 21 weisen einen Abstand zueinander auf, der dem doppelten Abstand a der Steckachse (Pos. 24) zu einer Querlagerachse (18, 20; 19, 21) entspricht (Fig. 3). Im vorliegenden Ausführungsbeispiel beträgt der Abstand a etwa 20 bis 30 mm bei einer Gesamtlänge der Trittplatte 17 von etwa 200 bis 250 mm und einer Breite von etwa 110 bis 140 mm.

Wird die Schaltplatte in der in Figur 3 mit 26 angegebenen Pfeilrichtung belastet, so schwenkt die Schaltplatte nicht um die Steckachsenlagerung 24, sondern um das Halbschalenquerlagerpaar 18, 20. Die beiden Vorsprünge 19 heben dabei von den Halbschalenquerlagern 21 ab. Dabei wird das Betätigungselement des unterhalb des Halbschalenlagers 21 liegenden Steuerelements 14 entlastet und dadurch ein Schalt- bzw. Steuersignal ausgelöst. Vorteile dieser Anordnung sind eine gute Justierung der Steuerelemente und das Erreichen exakter Ein- und Ausschaltpunkte. Nach einer relativ kurzhubigen Kippbewegung (etwa 1 bis 2 mm Verstellweg) liegt die Schaltplatte 16 an einem Anschlag 27 der Grundplatte 10 an. Entsprechendes gilt für die gegenüberliegende Seite, wo ein Anschlag 28 (Figur 2B) die Kippbewegung der Schaltplatte in der anderen Richtung begrenzt. In den durch die Anschläge 27 bzw. 28 begrenzten Schaltstellungen sind die in der Ruhestellung nicht aktivierten Schaltelemente 13, 14 und 15 aktiviert, d.h. je nachdem, nach welcher Seite die Schaltplatte gekippt wird, wird entweder das Schaltelement 13 betätigt oder es werden die Schalt- und Steuerelemente 14 und 15 aktiviert. Die Schaltelemente 13 und 14 sind in Längsrichtung gesehen seitlich versetzt angeordnet; durch eine solche Anordnung lassen sich Fehlschaltungen weitgehend vermeiden.

Die Schaltplatte 16 (Fig. 2A) enthält eine Bohrung 30, in die im montierten Zustand ein Zapfen 31 der Trittplatte 17 eingreift. Um diese Achse ist die Trittplatte 17 gegenüber der Schaltplatte 16 in horizontaler Ebene schwenkbar. Die Schaltplatte 16 enthält ferner einen angeformten, etwa T-förmig ausgebildeten Federbalken 33, der an den beiden Enden des Querschenkels Betätigungsflächen 34 zur Betätigung der Schaltelemente 11 und 12 (Fig. 2B) aufweist. Der Federbalken 33 ist aufgrund seiner Elastizität um einen Drehpunkt, der etwa bei der Position 35 liegt, beidseitig auslenkbar. Mittig des Federbalkens ist ein Mitnahmezapfen 36, der in eine entsprechende Mitnahmebohrung 37 der Trittplatte 17 eingreift, so daß bei einem Verdrehen der Trittplatte um den Lagerzapfen 31 der Federbalken 33 entsprechend um die Schwenkachse 35 ausgelenkt wird.

Die Verbindung des Fußauflageteils 5 mit der Trittplatte erfolgt durch im Fußauflageteil 5 kreuzweise angeordnete keilförmige Stege 38, die in entsprechend angeordnete Nuten 39 der Trittplatte 17 eingreifen, wodurch eine optimale Drehmomentübertragung gegeben ist.

Um die Trittplatte 17 sowohl in bezug auf die Kippbarkeit um die Querlager 20, 21 als auch in bezug auf die Verschwenkbarkeit um die Vertikalachslagerung 30, 31 in einer definierten Neutralstellung (Ruhestellung) zu halten, sind spezielle Rastelemente 40 und 41 vorgesehen, deren Funktion anhand der Figuren 4 und 5 näher erläutert wird.

Das Rastelement 40 (Fig. 2A) dient dazu, den Federbalken 33 in der Neutralstellung mit definierter Kraft zu halten und nach Überwinden der Haltekraft (Druckpunkt) in durch Anschläge 42, 43 begrenzte Endstellungen, die den Schaltstellungen entsprechen, zu fixieren. Die Figur 4 zeigt in einer Draufsicht das Rastelement 40 und die entsprechende Zuordnung zum Federbalken. Das Rastelement 40 ist als separates, in die Schaltplatte einsetzbares Teil ausgebildet und aufgrund seiner Formgebung so weit federelastisch, daß es zur Überwindung eines bestimmten Druckpunktes in der Neutralstellung einer gewissen Stellkraft bedarf, wobei diese Stell- oder Auslenkkraft durch die unmittelbar danach wirkenden Anschläge 42 oder 43 bewußt aufgefangen wird, was für den Benutzer eine deutlich spürbare Rückmeldung dafür ist, daß das entsprechende Schaltelement (11 oder 12) betätigt worden ist.

Das Rastelement 41 dient dazu, die Schaltplatte 16 in der Neutralstellung mit bestimmter Haltekraft zu fixieren und bei Überwindung dieser Haltekraft die Kippbewegung bis Erreichen des Anschlages 27 freizugeben. Auch hier ist der Verstellweg relativ kurz und das Erreichen des Anschlages unmittelbar nach Überwinden des Druckpunktes für den Benutzer deutlich spürbar. Auch dieses Rastelement ist federelastisch ausgebildet, wobei unter Bezugnahme auf Figur 5 ein in der Schaltplatte 16 gelagerter Zylinderstift 45 an einer schrägen Fläche 46 des Rastelements 11 so anliegt, daß die Schaltplatte mit definierter Kraft in der Neutralposition gehalten wird. Nach Überwinden des Druckpunktes wird die Schaltplatte nach unten freigegeben, bis unmittelbar danach diese am Anschlag 27, der wiederum einer Schaltstellung entspricht, zur Anlage kommt.

## Patentansprüche

1. Fußsteuervorrichtung für zahnärztliche Zwecke, bei der ein an einem Basisteil (3) kippbares Betätigungsorgan (4) vorhanden ist, auf das der Fuß einer Bedienperson vollflächig aufstellbar ist und das zum Auslösen einer Schalt-/Steuerfunktion aus einer Neutralstellung in mindestens zwei einander entgegengesetzt gerichtete Schaltstellungen bringbar ist, in denen zumindest ein Schalt-/Steuerelement (13, 14, 15) betätigt wird, dadurch gekennzeichnet, daß das Betätigungsorgan (4) mit Hilfe von zwei im Abstand (2 x a) voneinander und mit ihren Achsen parallel zueinander angeordneten Kipplagern (18, 20; 19, 21) an dem Basisteil (3) gelagert ist.

2. Fußsteuervorrichtung nach Anspruch 1, bei der die Schalt-/Steuerelemente (13, 14) in Ebene der Kipplager (18, 20; 19, 21) angeordnet sind.

3. Fußsteuervorrichtung nach Anspruch 2, bei der die Schalt-/Steuerelemente (13, 14) in bezug auf die Längssymmetrieachse seitlich versetzt angeordnet sind.

4. Fußsteuervorrichtung nach Anspruch 2 oder 3, bei der beiden Schaltstellungen ein mit einem Betätigungsglied versehenes Schaltelement (13, 14) zugeordnet ist und beide Schaltelemente so angeordnet sind, daß deren Betätigungsglieder in der Neutralstellung geschaltet sind.

5. Fußsteuervorrichtung nach Anspruch 1, bei der das Betätigungsorgan (4) eine Schaltplatte (16) enthält, die mittels quer zur Längssymmetrieachse angeordneter Halbschalen-Lager (18, 20; 19, 21) an einer Grundplatte (10) des Basisteils (3) kippbar gelagert ist.

6. Fußsteuervorrichtung nach Anspruch 5, bei der die Schaltplatte (16) mit Hilfe von Blattfedern (22) kippbar gelagert ist, wobei die Blattfedern so ausgebildet sind, daß sie die Schaltplatte (16) mit der Grundplatte (10) federnd verbinden, wobei die Blattfedern die Schaltplatte in der Neutralstellung gegen die beiden Halbschalen (20, 21) der Kipplager drücken.

7. Fußsteuervorrichtung nach Anspruch 6, bei der die Blattfedern (22) einerseits einen Vorsprung (23) der Grundplatte (10) spangenartig umgreifen und sich andererseits an in der Schaltplatte (16) gehalterten Steckachsen (24) abstützen.

8. Fußsteuervorrichtung nach einem der Ansprüche 6 oder 7, bei der die Blattfedern (22) als leicht von der Grundplatte (10) lösbare Elemente ausgebildet sind.

9. Fußsteuervorrichtung, nach einem der Ansprüche 1 bis 8, bei der das Betätigungsorgan mit Hilfe eines Rastgliedes (40, 41) in der Neutralstellung mit definierter Haltekraft gehalten wird, wobei nach Überwinden eines durch die Haltekraft definierten Druckpunktes das Betätigungsorgan (4) nach einem relativ kurzen Verstellweg durch einen Anschlag (27, 28) begrenzt wird und ein Steuervorgang ausgelöst wird.

10. Fußsteuervorrichtung nach Anspruch 9, bei der die Anordnung so getroffen ist, daß nach Überwinden des Druckpunktes die Haltekraft stark abnimmt oder unwirksam wird, währenddessen bei Erreichen eines in den Schaltstellungen angeordneten Anschlages (27, 28; 42, 43) die im Vergleich zur Haltekraft geringere Rückstellkraft zunimmt bzw. wirksam wird.

11. Fußsteuervorrichtung nach Anspruch 9, bei der das Betätigungsorgan (4) eine Trittplatte (17) umfaßt, die um eine vertikale Achslagerung (30, 31) gegen eine Schaltplatte (16) in horizontaler Ebene schwenkbar ist, wobei die Schaltplatte (16) einen Federbalken (33) enthält, welcher einerseits mit Hilfe eines Mitnehmergliedes (36) mit der Trittplatte (17) und andererseits mit einem auf der Schaltplatte (16) angeordneten ersten Rastglied (40) zusammenwirkt.

12. Fußsteuervorrichtung nach Anspruch 11, bei der Schaltplatte (16) und Federbalken (33) als einstückiges Teil, vorzugsweise aus Kunststoff, ausgebildet sind.

13. Fußsteuervorrichtung nach Anspruch 12, bei der der Federbalken (33) etwa ⊥ -förmig ausgebildet ist, wobei die Enden des Querschenkels Betätigungsflächen (34) für mit diesen zusammenwirkenden und auf der Grundplatte (10) angeordneten Schalt-/Steuerelemente (11, 12) enthalten.

14. Fußsteuervorrichtung nach Anspruch 11, bei der die Schaltplatte (16) um eine horizontale Achslagerung (18, 20; 19, 21) kippbar ist und bei der zumindest in der einen, einer Schaltstellung entsprechenden Kippstellung ein zweites Rastglied (41) angeordnet ist.

15. Fußsteuervorrichtung nach einem der Ansprüche 9 bis 14, bei der das Rastglied (40) auch Anschläge (42, 43) für den Federbalken (33) beinhaltet.

16. Fußsteuervorrichtung nach einem der Ansprüche 9 bis 14, bei der das Rastglied (40, 41) aus einem elastisch verformbaren Kunststoff besteht.

## Claims

1. Foot control device for dental purposes, in which there is an actuation member (4) which can be tilted on a base part (3) and an operator's foot can be placed all over this actuation member, which can be brought from a neutral position into at least two switch positions directly opposite one another for triggering a switch/control function, with at least one switch/control element (13, 14, 15) being actuated in these switch positions, **characterised in that** the actuation member (4) is seated on the base part (3) with the aid of two tilting bearings (18, 20; 19, 21) arranged at a distance (2 x a) from each other and with their axes parallel to each other.

2. Foot control device according to claim 1, in which the switch/control elements (13, 14) are arranged in the plane of the tilting bearings (18, 20; 19, 21).

3. Foot control device according to claim 2, in which the switch/control elements (13, 14) are arranged laterally offset with regard to the longitudinal axis of symmetry.

4. Foot control device according to claim 2 or 3, in which a switch element (13, 14) provided with an actuation element is assigned to both of the switch positions and both of the switch elements are arranged so that their actuation elements are engaged in the neutral position.

5. Foot control device according to claim 1, in which the actuation member (4) comprises a switch plate (16) which is seated for tilting on a base plate (10) of the base part (3) by means of half-shell bearings (18, 20; 19, 21) arranged transversely relative to the longitudinal axis of symmetry.

6. Foot control device according to claim 5, in which the switch plate (16) is seated for tilting with the aid of leaf springs (22), wherein the leaf springs are formed so that they resiliently connect the switch plate (16) to the base plate (10), wherein the leaf springs press the switch plate against the two half shells (20, 21) of the tilting bearing in the neutral position.

7. Foot control device according to claim 6, in which the leaf springs (22) on the one hand embrace in the manner of a clasp a projection (23) of the base plate (10) and on the other hand are supported on full floating axes (24) mounted in the switch plate (16).

8. Foot control device according to one of claims 6 or 7, in which the leaf springs (22) are formed as elements that can be easily detached from the base plate (10).

9. Foot control device according to one of claims 1 to 8, in which the actuation member is held in the neutral position with a defined retaining force with the aid of a catch element (40, 41), wherein, after a pressure point defined by the retaining force is overcome, the actuation member (4) is limited after a relatively short range of movement by a limit stop (27, 28) and a controlling action is triggered.

10. Foot control device according to claim 9, in which the arrangement is formed so that, after the pressure point is overcome, the retaining force decreases greatly or becomes ineffective; meanwhile, the restoring force, which is lower in comparison to the retaining force, increases or becomes effective when a limit stop (27, 28; 42, 43) arranged in the switch positions is reached.

11. Foot control device according to claim 9, in which the actuation member (4) comprises a foot board (17) which can be pivoted relative to a switch plate (16) in the horizontal plane around a vertical shaft bearing (30, 31), wherein the switch plate (16) comprises a spring beam (33) which co-operates on the one hand with the foot board (17) with the aid of a dog element (36) and on the other hand with a first catch element (40) arranged on the switch plate (16).

12. Foot control device according to claim 11, in which the switch plate (16) and the spring beam (33) are formed as a one-piece part, preferably made of plastics material.

13. Foot control device according to claim 12, in which the spring beam (33) is approximately ⊥-shaped, wherein the ends of the cross leg comprise actuation surfaces (34) for switch/control elements (11, 12) which co-operate with these actuation surfaces and which are arranged on the base plate (10).

14. Foot control device according to claim 11, in which the switch plate (16) can be tilted around a horizontal shaft bearing (18, 20; 19, 21), and in which a second catch element (41) is arranged at least in one tilting position corresponding to a switch position.

15. Foot control device according to one of claims 9 to 14, in which the catch element (40) also comprises limit stops (42, 43) for the spring beam (33).

16. Foot control device according to one of claims 9 to 14, in which the catch element (40, 41) consists of an elastically deformable plastics material.

## Revendications

1. Dispositif de commande au pied à usage de dentisterie, dans lequel on prévoit un organe d'actionnement (4), propre à basculer sur un élément formant base (3) et sur lequel toute la surface du pied d'utilisateur peut venir s'appliquer et qui, pour déclencher une fonction de commutation/commande, peut passer, à partir d'une position neutre, dans au moins deux positions de commutation, opposées l'une à l'autre et dans lesquelles au moins un élément de commutation/commande (13, 14, 15) est actionné, caractérisé par le fait que l'organe d'actionnement (4) est monté sur l'élément formant base (3) à l'aide de deux supports oscillants (18, 20 ; 19, 21) placés à une distance (2 x a) l'un de l'autre et dont les axes sont parallèles l'un à l'autre.

2. Dispositif de commande au pied selon la revendication 1, dans lequel les éléments de commutation/commande (13, 14) sont disposés dans le plan des supports oscillants (18, 20 ; 19, 21).

3. Dispositif de commande au pied selon la revendication 2, dans lequel les éléments de commutation/commande (13, 14) sont disposés latéralement décalés par rapport à l'axe longitudinal de symétrie.

4. Dispositif de commande au pied selon la revendication 2 ou 3, dans lequel un élément de commutation (13, 14), pourvu d'un élément d'actionnement, est associé aux deux positions de commutation, les deux éléments de commutation étant disposés de telle manière que leurs éléments d'actionnement soient en fonction dans la position neutre.

5. Dispositif de commande au pied selon la revendication 1, dans lequel l'organe d'actionnement (4) comprend une plaque de commutation (16) qui est montée, au moyen de supports en demi-coquille (18, 20 ; 19, 21), disposés transversalement à l'axe longitudinal de symétrie, sur une platine (10) de l'élément formant base (3), de manière à pouvoir basculer.

6. Dispositif de commande au pied selon la revendication 5, dans lequel la plaque de commutation (16) est montée à l'aide de ressorts à lame (22) de manière à pouvoir basculer, les ressorts à lame ayant une forme telle qu'ils relient élastiquement la plaque de commutation (16) à la platine (10), les ressorts à lames repoussant, dans la position neutre, la plaque de commutation sur les deux demi-coquilles (20, 21) des supports oscillants.

7. Dispositif de commande au pied selon la revendication 6, dans lequel les ressorts à lame (22) entourent, d'une part, à la manière d'une agrafe, une saillie (23) de la platine (10) et s'appuient, d'autre part, contre des broches (24) retenues dans la plaque de commutation (16).

8. Dispositif de commande au pied selon l'une des revendications 6 ou 7, dans lequel les ressorts à lame (22) sont réalisés sous la forme d'éléments aisément détachables de la platine (10).

9. Dispositif de commande au pied selon l'une des revendications 1 à 8, dans lequel l'organe d'actionnement est retenu dans la position neutre avec une force de maintien définie, à l'aide d'un élément d'encliquetage (40, 41) et, après avoir surmonté un point de poussée, défini par la force de maintien, l'organe d'actionnement (4) est limité, après un déplacement relativement court, par une butée (27, 28) et une opération de commande est déclenchée.

10. Dispositif de commande au pied selon la revendication 9, dans lequel l'agencement est tel que, après avoir surmonté le point de poussée, la force de maintien diminue fortement ou devient inefficace et, pendant ce temps, lorsqu'une butée (27, 28 ; 42, 43), disposée dans les positions de commutation, est atteinte, une force de rappel, plus réduite par rapport à la force de maintien, croît ou devient efficace.

11. Dispositif de commande au pied selon la revendication 9, dans lequel l'organe d'actionnement (4) comprend une pédale (17), qui peut pivoter autour d'un axe vertical (30, 31) dans un plan horizontal par rapport à une plaque de commutation (16), la plaque de commutation (16) comportant une barrette élastique (33) qui coopère, d'une part, à l'aide d'un élément d'entraînement (36) avec la pédale (17) et, d'autre part, avec un premier élément d'encliquetage (40) disposé sur la plaque de commutation (16).

12. Dispositif de commande au pied selon la revendication 11, dans lequel la plaque de commutation (16) et la barrette élastique (33) sont réalisées sous la forme d'une pièce d'un seul tenant, de préférence en matière plastique.

13. Dispositif de commande au pied selon la revendication 12, dans lequel la barrette élastique (33) est réalisée à peu près en forme de ⊥, les extrémités de la branche transversale comportant des surfaces d'actionnement (34) pour des éléments de commutation/commande (11, 12), qui coopèrent avec elles et qui sont disposés sur la platine (10).

14. Dispositif de commande au pied selon la revendication 11, dans lequel la plaque de commutation (16) peut basculer autour d'un axe horizontal (18, 20 ; 19, 21) et dans lequel un second élément d'encliquetage (41) est disposé dans une position de basculement, correspondant à une position de commutation.

15. Dispositif de commande au pied selon l'une des revendications 9 à 14, dans lequel l'élément d'encliquetage (40) comprend également des butées (42, 43) pour la barrette élastique (33).

16. Dispositif de commande au pied selon l'une des revendications 9 à 14, dans lequel l'élément d'encliquetage (40, 41) consiste en une matière plastique élastiquement déformable.
